# EUROPEAN PATENT APPLICATION

(11) **EP 1 906 373 A2**
(43) Date of publication of application: **02.04.2008**
(21) Application number: 07116437.0
(22) Date of filing: 14.09.2007
(51) Int. Cl.: G08G 1/01

(54) **Traffic information generating apparatus and traffic information generating method**

(30) Priority: 29.09.2006 JP 2006266408
(71) Applicant: Aisin AW Co., Ltd., Fujii-cho Anjo-shi, Aichi 444-1192 (JP)
(72) Inventor: Hiroki, Ishikawa c/o Aisin AW CO, LTD, Aichi 444-8564 (JP); Kenji, Nagase c/o Aisin AW CO, LTD, Aichi 444-8564 (JP)
(74) Representative: Vossius & Partner

(57) **Abstract**

A CPU specifies factors that are related to the month, the day of the week, and a time period that correspond to a current point in time, based on time data obtained by a timer or the like. The CPU also specifies factors that are related to a mesh ID and a road category of a corresponding one of the links, based on map display data, link data, and the like that are stored in update-purpose map information. The CPU then reads a sample number indicating how many samples are required in order to generate traffic information of the corresponding one of the links, out of sample number data. The CPU thereby sequentially determines the required collected sample numbers for the links. In a case where a center-side traffic information DB stores therein, for each of the links, an equal or larger number of pieces of probe information than the collected sample number indicating how many samples are required in order to generate the traffic information, the CPU generates the traffic information for the link and stores the generated traffic information as part of current traffic information.

## Description

The present invention relates to a traffic information generating apparatus and a traffic information generating method for generating traffic information including congestion information. In particular, the present invention relates to a traffic information generating apparatus and a traffic information generating method for generating traffic information, based on probe information collected from a navigation apparatus installed in a probe car.

In recent years, various types of traffic information generating apparatuses and traffic information generating methods have been proposed which use a vehicle that is being driven as a sensor (called "a probe car") and generate traffic information including congestion information based on probe information such as the speed (the time / the position) that has been collected from the probe car.

For example, depending on a collection situation of the probe information, i.e., for example, depending on the number of probe cars traveling through a road section as a target of the collection and the driving speed of the probe cars, the length of traffic information judging sections used for judging the road conditions including the level of traffic congestion can variably be set. Traffic information generatable routes that are constituted by vehicular swept path data are divided into the variable traffic information judging sections that have been set, so that traffic information including an average travel time, the level of congestion, and an average speed is generated. As one example, a traffic information generating apparatus and a traffic information generating method have been disclosed (see JP-A-2006-31422; paragraphs 0022 to 0064 and FIGS. 1 to 12) by which, when the number of probe cars is small or when the driving speed of the probe cars is high, the section is set to be long in distance, whereas when the number of probe cars is large or when the driving speed of the probe cars is low, the section is set to be short in distance.

According to the arrangement disclosed in
JP-A-2006-31422 described above, the probe information is received from a plurality of probe cars and input, so that road sections that correspond to the probe information are specified by performing a map matching process with the use of map data stored in a map information data base (hereinafter "map information DB"). For each of the probe cars, the vehicular swept path data is generated, based on the probe information. The traffic information is generated by setting the road sections to be short in distance when the number of probe cars that travel through one section is large, and by setting the road sections to be long in distance when the number of probe cars that travel through one section is small. According to this arrangement, when the number of probe cars is small (for example, one), even if the road is a road on which driving conditions can easily change, the traffic information is generated by setting the road sections to be long. Thus, variation in the probe information for such road sections is large, and a problem arises where the level of accuracy of the traffic information is lowered. For example, when there is a traffic light in a road section, variation in the probe information related to the travel time and the vehicle speed in the road section becomes large, depending on whether probe cars are stopped or not at the traffic light. This leads to the problem where the level of accuracy of the traffic information is lowered.

It is an object of the present invention to solve the problem described above by providing a traffic information generating apparatus and a traffic information generating method with which it is possible to generate traffic information with a high level of accuracy, based on an appropriately-determined collected sample number indicating how many samples of probe information are required.

The traffic information generating apparatus according to a first aspect of the present invention stores therein, in correspondence with each of the road categories, a collected sample number indicating how many samples of the probe information are required in order to generate traffic information of a link. Based on the collected sample number, in a case where it has been judged that as many samples of the probe information as required have been collected, the traffic information of the corresponding link is generated.

With this arrangement, it is possible to set the collected sample numbers each indicating how many samples of the probe information are required in order to generate the traffic information of a corresponding one of the links, in such a manner that the collected sample numbers change in correspondence with the road categories. More specifically, it is possible to set, in advance, the collected sample numbers in such a manner that the collected sample numbers change in correspondence with the levels of reliability of the probe information. Thus, it is possible to generate traffic information that has an even higher level of accuracy with a smaller number of samples. For example, when the road category of a road on which a probe car is driven is a national expressway or an urban expressway that has no traffic lights, because the level of reliability of the probe information is high, it is possible to generate the traffic information that has a higher level of accuracy by setting, in advance, the collected sample number to a smaller number (for example, by setting the collected sample number to "1").

In the traffic information generating apparatus according to a second aspect of the present invention, the collected sample number is stored for each of areas. For each of the links, an area that contains the link is detected. Based on the collected sample number that is in correspondence with the detected area, it is judged whether as many samples of the probe information as required in order to generate the traffic information of the link have been collected.

With this arrangement, it is possible to change, in correspondence with the areas, the collected sample numbers each indicating how many samples of the probe information are required in order to generate the traffic information of a corresponding one of the links. As a result, it is possible to set the collected sample numbers with a higher level of accuracy, while the locality is taken into consideration.

In the traffic information generating apparatus according to a third aspect of the present invention, the collected sample number is generated in correspondence with at least one of the month, the day of the week, and the time period. With this arrangement, it is possible to take a factor related to the time of the year and the day of the week and a factor related to the time of the day into consideration, when the collected sample number is determined. As a result, it is possible to improve the levels of accuracy of the required collected sample numbers that are specified in correspondence with the road categories.

In the traffic information generating apparatus according to a fourth aspect of the present invention, the collected sample number is generated in correspondence with whether each general road has traffic lights or not. With this arrangement, it is possible to make the level of accuracy of the traffic information higher, by setting the collected sample number for each of the links that are general roads having traffic lights, to a larger number. In addition, it is possible to generate traffic information that has a higher level of accuracy, also by setting the collected sample number for each of the links that are general roads having no traffic lights, to a smaller number (for example, by setting the collected sample number to 1).

In the traffic information generating apparatus according to a fifth aspect of the present invention, the collected sample number is generated in correspondence with the number of lanes in each general road. With this arrangement, it is possible to make the level of accuracy of the traffic information higher by setting the collected sample number for each of the links that are general roads having one lane, to a larger number. In addition, it is possible to generate traffic information that has a higher level of accuracy, also by setting the collected sample number for each of the links that are general roads having two or more lanes, to a smaller number (for example, by setting the collected sample number to 1).

Further, in the traffic information generating method according to a sixth aspect of the present invention, at first, the probe information is collected from the navigation apparatuses. It is then judged whether or not as many samples of the probe information as required have been collected, based on the collected sample number that is stored in advance in correspondence with each of the road categories and that indicates how many samples of the probe information are required in order to generate the traffic information of a link. Subsequently, in a case where it has been judged that as many samples of the probe information as required have been collected, the traffic information of the corresponding link is generated.

With this arrangement, it is possible to set the collected sample numbers each indicating how many samples of the probe information are required in order to generate the traffic information of a corresponding one of the links, in such a manner that the collected sample numbers change in correspondence with the road categories. More specifically, it is possible to set, in advance, the collected sample numbers in such a manner that the collected sample numbers change in correspondence with the levels of reliability of the probe information. Thus, it is possible to generate traffic information that has an even higher level of accuracy with a smaller number of samples. For example, when the road category of a road on which a probe car is driven is a national expressway or an urban expressway that has no traffic lights, because the level of reliability of the probe information is high, it is possible to generate the traffic information that has a higher level of accuracy by setting, in advance, the collected sample number to a smaller number (for example, by setting the collected sample number to "1").

A traffic information generating apparatus and a traffic information generating method according to the present invention will be explained in detail through an exemplary embodiment in which the apparatus and the method of the present invention are embodied in a navigation system, with reference to the accompanying drawings.
FIG. 1 is a block diagram that shows a navigation system according to an embodiment of the present invention;
FIG. 2 is a block diagram that shows a navigation apparatus included in the navigation system;
FIG. 3 is a drawing for explaining a data structure of sample number data;
FIG. 4 is a flowchart that shows a traffic information generating process performed by a CPU included in an information distribution center to generate current traffic information, based on probe information collected from the navigation apparatus; and
FIG. 5 is a drawing for explaining a data structure of the sample number data, according to another embodiment of the present invention.

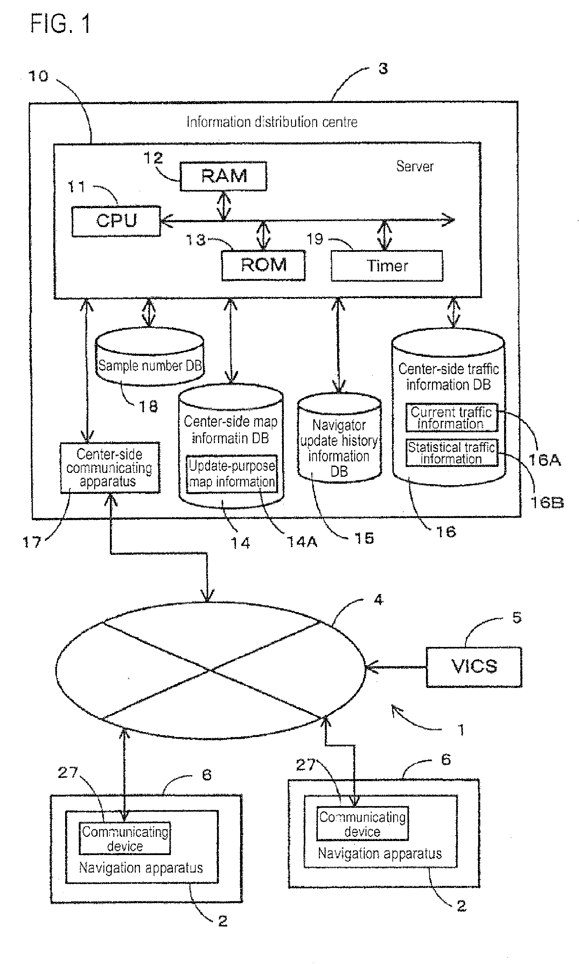

A schematic configuration of a navigation system 1 according to an embodiment of the present invention will be explained with reference to FIG. 1. FIG. 1 is a block diagram that shows the navigation system 1 according to the present embodiment.

As shown in FIG. 1, the navigation system 1 according to the present embodiment is basically configured so as to include: navigation apparatuses 2 each of which is installed in a different one of probe cars 6; an information distribution center 3 that distributes, to the navigation apparatuses 2, update information used for updating map information as well as traffic information including congestion information that is generated based on probe information collected from the navigation apparatuses 2 (which will be explained later); and a network 4. The navigation apparatuses 2 and the information distribution center 3 are configured so as to be able to transmit and receive various types of information to and from each other, via the network 4.

The Vehicle Information and Communication System (VICS: a registered trademark) 5 is connected to the network 4. The navigation apparatuses 2 and the information distribution center 3 are configured so as to be able to receive, once in a predetermined period of time via the network 4, traffic information including information related to congestion of roads and traffic control information that have been generated by collecting information from traffic control systems of the police, the Japan Highway Public Corporation and the like. The traffic information is detailed information related to road traffic information such as, for example, road congestion information related to congestion of roads and traffic control information due to road constructions and building constructions. The detailed information, if it is road congestion information, shows the following: a VICS link ID (explained later); the actual length of the congestion, the time required to drive through the congestion; the level of congestion (e.g., no congestion / crowded / congested); the speed of the vehicles in the congestion; the travel time; the traveling direction in the congested lane; and the time at which the congestion is expected to be over. The detailed information, if it is traffic control information, shows the following: a VICS link ID (explained later); the duration period of a road construction or a building construction; the type of traffic control indicating that, for example, the road is closed, one lane is alternately shared by two-way traffic, or the number of lanes available is reduced; and the time period during which the traffic control is applied.

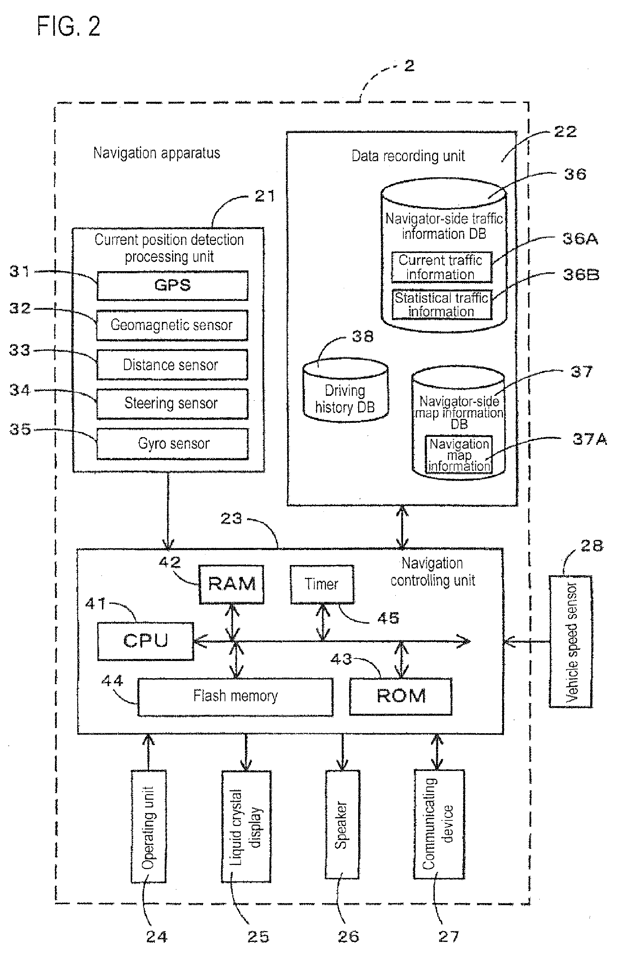

The configuration of the navigation apparatuses 2 will be explained in detail later, with reference to FIG 2.

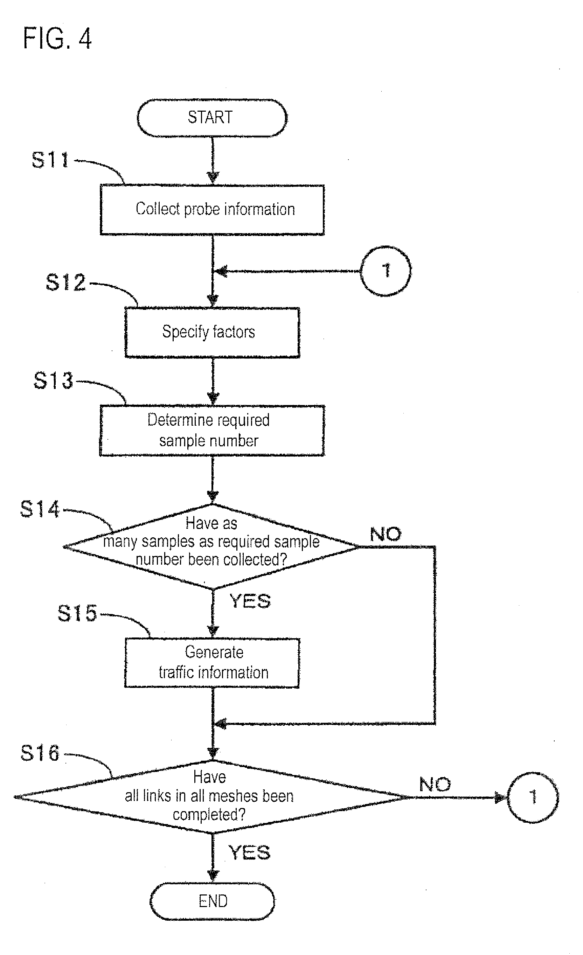

As shown in FIG. 1, the information distribution center 3 includes: a server 10; a center-side map information database (hereinafter, "the center-side map information DB") 14 that is connected to the server 10 and serves as a map information recording unit; a navigator update history information database (hereinafter, "the navigator update history information DB") 15; a center-side traffic information database (hereinafter, "the center-side traffic information DB") 16; a center-side communicating apparatus 17; and a sample number database (hereinafter "the sample number DB") 18. The server 10 includes: a CPU 11 that serves as a computing and controlling device that performs the overall control of the server 10; internal storage devices such as a RAM 12 that is used as a working memory when the CPU 11 performs various types of computation processes and a ROM 13; and a timer 19 that measures time. It is acceptable to use an MPU instead of the CPU 11. The ROM 13 has recorded therein various types of control programs for performing: a map information updating process to, according to a request from any one of the navigation apparatuses 2, extract update information from the center-side map information DB 14 and distribute the extracted update information to the navigation apparatus 2, so as to update a piece of map information corresponding to a predetermined area out of pieces of map information stored in the navigation apparatus 2, with a piece of map information of a new version; a traffic information generating process (see FIG. 4) to generate current traffic information based on probe information collected from any one of the navigation apparatuses 2 that are installed in the probe cars (explained later) 6; and a traffic information distributing process to, according to a request from any one of the navigation apparatuses 2, distribute the current traffic information via the network 4. Examples of the probe information include: the month, the day and the time, link information (e.g., a mesh ID, a link ID, the link length, whether there are traffic lights or not, the type of the road etc.), the traffic conditions (e.g., the travel time, the level of congestion, the speed etc.), the position of the vehicle, a mesh ID of the secondary mesh to which the vehicle position belongs, the operating state of the windshield wipers, the vehicle exterior/road surface temperature, the weather, ABS (Antilock Brake System) operation information, the road surface conditions, and the vehicle information (e.g., the type of the vehicle, the performance of the specifications, the vehicle speed, the occupants, the distribution rate of the weight of the vehicle, and how a torque is applied).

The center-side map information DB 14 stores therein update-purpose map information 14A that is map information used as a base when the map information that has been generated in the information distribution center 3 and stored in any of the navigation apparatuses 2 is to be updated, the update-purpose map information 14A being stored while being separated according to the version thereof. The center-side map information DB 14 further stores therein update information used for updating a part or the entirety of the map information currently stored in each of the navigation apparatuses 2 with the update-purpose map information 14A. The version mentioned here is generation time information for identifying a time at which each piece of map information was generated. By referring to the version, it is possible to identify a time at which each piece of map information was generated.

Various types of information that are required in order for each of the navigation apparatuses 2 to provide route guidance and display maps are recorded in the update-purpose map information 14A stored in the center-side map information DB 14. For example, the update-purpose map information 14A includes map display data used for displaying maps, intersection data related to intersections, node data related to node points, link data related to roads (i.e., road links) that are a type of facility, search data for searching for a route, shop data related to Points of Interest (POI) such as shops that are a type of facility, and retrieval data for retrieving a point of location.

In particular, the map display data is structured with units of quarters (dividing the length into halves), units of sixteenths (dividing the length into quarters), and units of sixty-fourths (dividing the length into eighths) obtained by dividing the secondary meshes each of which is approximately 10 kilometers squared. The units for different locations are set so that the data amount for each of the units is substantially at the same level. The smallest unit, which has the size of one sixty-fourth of a secondary mesh, is an area of approximately 1.25 kilometers squared.

As the node data, data related to the following is recorded: the actual branching points of the roads (including intersections and T-intersections); the coordinates (i.e., the positions) of the node points that are set in each of the roads for every section having a predetermined distance according to the curvature radius thereof or the like; the node attribute that shows whether each node corresponds to an intersection or not; a connected link number list that is a list of link IDs used as identification numbers of the links that are connected to the nodes; an adjacent node number list that is a list of the node numbers of the nodes that are positioned adjacent to the nodes via links; and the height (i.e., the altitude) of the node points.

As the link data, data related to the following is recorded: With regard to road links, (hereinafter, simply referred to as "links") that constitute roads, data expressing the width of the road to which the link belongs, the inclination, the cant, the bank, the road surface conditions, the number of lanes of the road, the locations at which the number of lanes is reduced, the locations at which the width of the road becomes smaller, and railroad crossings; With regard to corners, data expressing the curvature radius, the intersections, the T-intersections, the entrance and the exit of the corners; With regard to the road attribute, data expressing downhill roads and uphill roads; With regard to the types of the roads, data expressing national roads, major local roads, prefectural roads, general roads belonging to cities, towns, or villages, and small streets in downtown areas etc. that are narrower than the general roads, as well as data expressing toll roads such as national expressways, urban expressways, ordinary toll roads, and toll bridges. In addition, with regard to the toll roads, data related to ramps at the entrance and the exit of each toll road and toll booths (i.e., interchanges) is recorded.

As the search data, data that is used when a route to a specified destination is searched for or displayed is recorded. The search data includes cost data that is used for calculating a weight (hereinafter, referred to as a "cost") for each of the nodes that is determined based on a right/left turn made when the vehicle passes the node, the distance of the links that constitute the road, the width of the road, and the type of the road, as well as route display data used for displaying a route selected in a route searching process on a map displayed on a liquid crystal display 25 (see FIG. 2) included in each of the navigation apparatuses 2.

As the shop data, data related to the POIs in each location such as hotels, hospitals, gas stations, parking lots, and sightseeing facilities is recorded with the IDs that identify the POIs, respectively. The center-side map information DB 14 also records therein audio output data for outputting predetermined information through a speaker 26 (see FIG. 2) that is included in each of the navigation apparatuses 2.

At a time when a request is made by any one of the navigation apparatuses 2, the information distribution center 3 updates the map information stored in the navigation apparatus 2 with one of the pieces, which is the newest version, of update-purpose map information 14A stored in the center-side map information DB 14. More specifically, in the navigation system 1 according to the present embodiment, when any one of the navigation apparatuses 2 has requested that a piece of update-purpose map information 14A should be distributed thereto, update information used for updating the stored map information with the one of the pieces of update-purpose map information 14A, which is the newest version, is distributed to the navigation apparatus 2, so that an updating process can be performed. In order to transmit the update information to the navigation apparatus 2, it is acceptable to transmit the entire information of the one of the pieces of update-purpose map information 14A, which is the newest version, that includes new road information for identifying newly-built roads. Alternatively, it is acceptable to transmit minimum necessary information (e.g., only the information in an updated portion that includes the new road information for identifying the newly-built roads) for updating the map information currently stored in the navigation apparatus 2 with the one of the pieces of update-purpose map information 14A, which is the newest version.

The navigator update history information DB 15 stores therein information related to an update history indicating the updates that have so far been applied to the map information stored in the navigation apparatuses 2, together with navigator identification IDs each of which identifies a different one of the navigation apparatuses 2. As the update history, data specifically showing which version of map information is used for each of the pieces of link data and the pieces of node data that constitute the map information is stored. Every time the map information stored in each of the navigation apparatuses 2 is updated, the update history is re-written with new data.

The center-side traffic information DB 16 stores therein current traffic information 16A that is information related to current road congestion or the like and has been generated by collecting the probe information collected from the navigation apparatuses 2 installed in the probe cars 6 and traffic information received from the Vehicle Information Communication System (VICS: a registered trademark) 5. Examples of the probe information include: the month, the day and the time, link information (e.g., a mesh ID, a link ID, the link length, whether there are traffic lights or not, the type af the road etc.), the traffic conditions (e.g., the travel time, the level of congestion, the speed etc.), the position of the vehicle, a mesh ID of the secondary mesh to which the vehicle position belongs, the operating state of the windshield wipers, the vehicle exterior/road surface temperature, the weather, ABS (Antilock Brake System) operation information, the road surface conditions, and the vehicle information (e.g., the type of the vehicle, the performance of the specifications, the vehicle speed, the occupants, the distribution rate of the weight of the vehicle, and how a torque is applied). The center-side traffic information DB 16 also stores therein statistical traffic information 16B that has been generated based on the past traffic information, including VICS signals received from the Vehicle Information Communication System (VICS: a registered trademark) 5 and the probe information collected from the probe cars 6.

The statistical traffic information 16B may include event schedule information such as locations, dates, and times of events including festivals, parades, and firework shows. The statistical traffic information 16B may also include statistical congestion information or congestion prediction information indicating that, for example, the roads near a station or a large shopping mall are congested every day during a specific time period of the day except on the weekends, or the roads near a swimming beach are congested during summer holidays.

At a time when a request is made by any one of the navigation apparatuses 2, the information distribution center 3 selects and distributes traffic information between intersections, the statistical traffic information 16B or the like, based on the current traffic information 16A stored in the center-side traffic information DB 16.

The traffic information received from the Vehicle Information and Communication System (VICS: a registered trademark) 5 includes a VICS link ID as well as the road type information, and information related to the position, the distance of the congested section, and the level of congestion. The VICS link ID is an identification number that is assigned to each VICS link serving as a driving guidance link standardized while the road is divided into sections at predetermined intersections. The traffic information also includes information related to the coordinates of the starting point and the ending point of each of the VICS links and also distance between the starting point and the ending point.

The roads (i.e., links) and the VICS links that are stored in the center-side map information DB 14 are not the same as each other. (Generally speaking, roads (links) are more finely divided than VICS links are. Thus, a conversion table (i.e., a reference table) to convert between road link IDs and the VICS link IDs is provided, the road link IDs being assigned to the roads (i.e., links), respectively, as identification numbers. By referring to the conversion table, it is possible to identify, based on a VICS link ID, a road link ID that corresponds to the VICS link ID. With this arrangement, it is possible to transmit the traffic information after converting the VICS link IDs to road link IDs that are used in the navigation apparatuses 2.

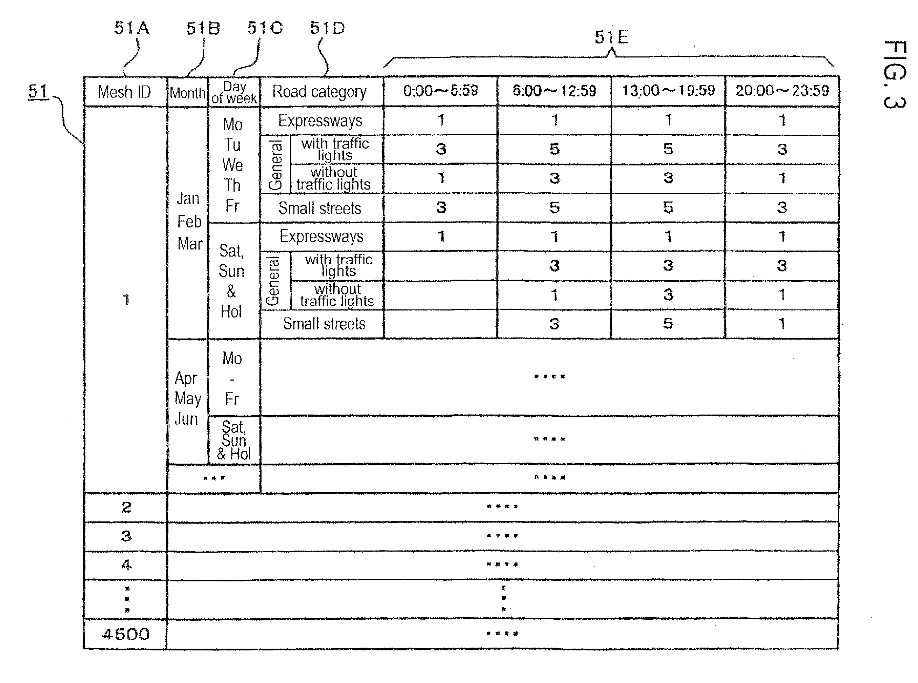

As explained later, when generating the current traffic information based on the probe information collected from the navigation apparatuses 2 installed in the probe cars 6, the information distribution center 3 determines a sample number indicating how many samples are required, based on sample number data 51 (see FIG. 3) stored in the sample number DB 18.

Next, the sample number data 51 will be explained with reference to FIG 3. FIG. 3 is a drawing for explaining the data structure of the sample number data 51 stored in the sample number DB 18.

As shown in FIG. 3, in the sample number data 51, the following elements are specified: mesh IDs 51A serving as identification codes (IDs) that are respectively assigned to the aforementioned secondary meshes serving as areas; the months 51B; the days of the week 51C, sample numbers 51E each of which is specified for one of the road categories 51D and indicates how many samples of the probe information are required in order to generate the traffic information.

The data subordinate to the mesh IDs 51A is the months 51B. With regard to the months 51B, the sample numbers 51E are shown substantially for each of the seasons such as "January to March", "April to June", "July to September", and "October to December". The data subordinate to the months 51B is the days of the week 51C. With regard to the days of the week 51C, the sample numbers 51E are shown for "Monday through Friday" denoting weekdays and for "Saturday, Sunday, and Holidays" denoting non-business days.

The data subordinate to the days of the week 51C is the road categories 51D. With regard to the road categories 51D, the sample numbers 51E are shown for "EXPRESSWAYS" that represents national expressways, urban expressways, and ordinary toll roads, "GENERAL" that represents national roads, major local roads, prefectural roads, general roads belonging to cities, towns, or villages, and "SMALL STREETS" that represents small streets in downtown areas etc. that are narrower than the general roads. Further, with regard to "GENERAL" that represents the general roads, the sample numbers 51E are shown for categories of "WITH TRAFFIC LIGHTS" that represents roads having traffic lights and "WITHOUT TRAFFIC LIGHTS" that represents roads having no traffic lights.

The sample number data 51E is stored for each of the meshes that serve as areas. The sample number data 51E is data that indicates how many samples are required in order to generate the traffic information of each of the meshes, in correspondence with each of the time periods of the day, namely, "0:00 - 5:59", "6:00 - 12:59", "13:00 - 19:59", and "20:00 - 23:59". The data for twenty-four hours is stored. More specifically, the sample number data 51E is data in which factors related to the mesh IDs 51A (the locality), the months 51B, the days of the week 51C, the road categories 51D, and the time periods are taken into account.

For example, when the mesh ID 51A is "1", the month 51B is "January", the day of the week 51C is "Monday", the road category 51D is "EXPRESSWAY", and the time period is "6:00-12:59", the sample number 51E is "1". It means that the number of samples of the probe information that are required in order to generate the traffic information of a national expressway, an urban expressway, or the like is at least "1".

As another example, when the mesh ID 51A is "1", the month 51B is "February", the day of the week 51C is "Wednesday", the road category 51D is "GENERAL: WITH TRAFFIC LIGHTS", and the time period is "6:00-12:59", the sample number 51E is "5". It means that the number of samples of the probe information that are required in order to generate the traffic information for a national road, a major local road, a prefectural road, and a general road belonging to a city, a town, or a village that has traffic lights is at least "5".

As yet another example, when the mesh ID 51A is "1", the month 51B is "March", the day of the week 51C is "Sunday", the road category 51D is "SMALL STREETS", and the time period is "6:00-12:59", the sample number 51E is "3". It means that the number of samples of the probe information that are required in order to generate the traffic information for a small street in a downtown area or the like that is narrower than a general road is at least "3".

It is acceptable to have an arrangement in which the information distribution center 3 is run by any of the following: an individual, a corporation, an organization, a local government, and a government-related organization. The information distribution center 3 may be run by the Vehicle Information Communication System (VICS: a registered trademark) 5, as well.

As the network 4, it is possible to use a communication system of any communication network such as, for example, a LAN (Local Area Network), a WAN (Wide Area Network), an Intranet, a mobile phone network, a telephone network, a public communication network, a dedicated communication network, or the Internet. It is also possible to use a communication system that uses CS broadcast realized by broadcast satellites, BS broadcast, terrestrial digital television broadcast, or FM multiplex broadcast. Further, it is also possible to use a communication system used in Intelligent Transport Systems (ITS), such as an Electronic Toll Collection (ETC) system or a Dedicated Short Range Communication (DSRC) system.

Next, a schematic configuration of each of the navigation apparatuses 2 that are included in the navigation system 1 according to the present embodiment will be explained, with reference to FIG. 2. FIG. 2 is a block diagram that shows the navigation apparatus 2 according to the present embodiment.

As shown in FIG. 2, the navigation apparatus 2 according to the present embodiment includes a current position detection processing unit 21 that detects a current position of the vehicle; a data recording unit 22 that has recorded therein various types of data; a navigation controlling unit 23 that performs various types of computation processes, based on input information; an operating unit 24 that receives an operation by an operator; the liquid crystal display 25 that displays information such as maps to the operator; the speaker 26 that outputs audio guidance related to route guidance; and a communicating device 27 that performs communication with the Vehicle Information and Communication System (VICS: a registered trademark) 5, the information distribution center 3, or the like via, for example, a mobile phone network. A vehicle speed sensor 28 that detects the driving speed of the vehicle is connected to the navigation controlling unit 23.

Next, the constituent elements of the navigation apparatus 2 will be explained. The current position detection processing unit 21 includes a GPS 31, a geomagnetic sensor 32, a distance sensor 33, a steering sensor 34, a gyro sensor 35 that serves as a direction detecting unit, and an altimeter (not shown in the drawing). The current position detection processing unit 21 is configured so as to be able to detect a current position of the vehicle, the direction in which the vehicle is oriented, the distance to a target object (for example, an intersection), and the like.

More specifically, the GPS 31 detects a current position of the vehicle on the earth and a current time by receiving a radiowave generated by an artificial satellite. The geomagnetic sensor 32 detects the direction in which the vehicle is oriented by measuring the terrestrial magnetism. The distance sensor 33 detects, for example, a distance between predetermined positions on a road. As the distance sensor 33, it is acceptable to use a sensor that measures the rotation speed of the wheels (not shown in the drawing) of the vehicle and detects a distance based on the measured rotation speed, or a sensor that measures an acceleration and detects a distance by integrating the measured acceleration twice.

The steering sensor 34 detects a steering angle of the vehicle. As the steering sensor 34, it is acceptable to use, for example, an optical rotation sensor that is attached to a rotating portion of the steering wheel (not shown in the drawing), a rotation resistance sensor, or an angle sensor attached to the wheels.

The gyro sensor 35 detects the turning angle of the vehicle. As the gyro sensor 35, it is acceptable to use, for example, a gas rate gyro, a vibration gyro, or the like. By integrating the turning angle detected by the gyro sensor 35, it is possible to detect the direction in which the vehicle is oriented.

The data recording unit 22 includes: a hard disk (not shown in the drawing) that serves as an external storage device and storage medium; databases that are stored in the hard disk, the databases namely being a navigator-side traffic information database (hereinafter, "the navigator-side traffic information DB") 36, a navigator-side map information database (hereinafter, "the navigator-side map information DB") 37, and a driving history database (hereinafter, "the driving history DB") 38; and a recording head (not shown in the drawing) that serves as a driver to read a predetermined program and the like and also to write predetermined data to the hard disk. In the present embodiment, the hard disk is used as the external storage device and storage medium included in the data recording unit 22; however, instead of the hard disk, it is acceptable to use a magnetic disc such as a flexible disc as the external storage device. Alternatively, it is acceptable to use, as the external storage device, a memory card, a magnetic tape, a magnetic drum, a CD, an MD, a DVD, an optical disc, an MO, an 1C card, an optical card, or the like.

The navigator-side traffic information DB 36 stores therein current traffic information 36A generated based on traffic information that has been received from the information distribution center 3 or the Vehicle Information and Communication System (VICS) 5, the traffic information including road congestion information related to the current congestion conditions of the roads such as the actual length of the congestion, the required travel time, the cause of the congestion, and the time at which the congestion is expected to be over as well as traffic control information due to road constructions, building constructions, and the like. Statistical traffic information 36B stored in the navigator-side traffic information DB 36 includes the aforementioned statistical traffic information 16B that has been distributed from the information distribution center 3 via the communicating device 27. The contents of the statistical traffic information 16B included in the statistical traffic information 36B is updated by downloading the update information that has been distributed from the information distribution center 3 via the communicating device 27.

It is acceptable to configure each of the navigation apparatuses 2 so as to have an arrangement in which the aforementioned statistical traffic information 16B supplied on a CD-ROM or the like is stored into the statistical traffic information 36B, so that the statistical traffic information 36B is updated based on a driving history, once in a predetermined period of time (for example, once a week or once every three months).

The statistical traffic information 36B may also include event schedule information such as locations, dates, and times of events including festivals, parades, and firework shows. In addition, the statistical traffic information 36B may also include statistical congestion information or congestion prediction information indicating that, for example, the roads near a station or a large shopping mall are congested every day during a specific time period of the day except on the weekends, or the roads near a swimming beach are congested during summer holidays.

The navigator-side map information DB 37 stores therein navigation map information 37A that is used in driving guidance and route searches performed by the navigation apparatuses 2 and is also a target of an update performed by the information distribution center 3. Like the update-purpose map information 14A, the navigation map information 37A includes various types of information that are required in order to provide route guidance and display maps. The navigation map information 37A includes, for example, new road information for identifying newly-built roads, map display data for displaying maps, intersection data related to intersections, node data related to node points, link data related to roads (i.e., links) that are a type of facility, search data for searching for a route, shop data related to Points of Interest (POI) such as shops that are a type of facility, and retrieval data for retrieving a point of location. The details of the various types of data have already been explained above. Thus, detailed explanation thereof will be omitted. The contents of the navigator-side map information DB 37 is updated by downloading the update information that has been distributed from the information distribution center 3 via the communicating device 27.

Every time the vehicle is driven on a link, the driving history DB 38 sequentially stores therein, a piece of probe information. Examples of the probe information include: the month, the day and the time, link information (e.g., a mesh ID, a link ID, the link length, whether there are traffic lights or not, the type of the road etc.), the traffic conditions (e.g., the travel time, the level of congestion, the speed etc.), the position of the vehicle, a mesh ID of the secondary mesh to which the vehicle position belongs, the operating state of the windshield wipers, the vehicle exterior/road surface temperature, the weather, ABS (Antilock Brake System) operation information, the road surface conditions, and the vehicle information (e.g., the type of the vehicle, the performance of the specifications, the vehicle speed, the occupants, the distribution rate of the weight of the vehicle, and how a torque is applied). Each of the navigation apparatuses 2 installed in the probe car 6 transmits, to the information distribution center 3 via the communicating device 27, one or more pieces of probe information that have newly been stored in the driving history DB 38 since an immediately-preceding transmission point in time at which a piece of probe information is transmitted to the information distribution center 3, once in a predetermined period of time (e.g., "once every 5 minutes", "once every 15 minutes", or "once every 30 minutes") in a case where the probe car 6 is being driven, or every time the vehicle is driven on a link.

Also, as shown in FIG. 2, the navigation controlling unit 23 included in each of the navigation apparatuses 2 includes: a CPU 41 that serves as a computing and controlling device that performs the overall control of the navigation apparatus 2; internal storage devices such as a RAM 42 that is used as a working memory when the CPU 41 performs various types of computation processes and that stores therein, for example, route data after a route has been found in a search and the traffic information received from the information distribution center 3, a ROM 43 that stores therein a control program as well as a probe information transmission processing program used for obtaining the probe information and transmitting, once in a predetermined period of time, the obtained probe information to the information distribution center 3, and a flash memory 44 that stores therein a program that has been read from the ROM 43; as well as a timer 45 that measures time. As each of the RAM 42, the ROM 43, and the flash memory 44, it is acceptable to use a semiconductor memory, a magnetic core, or the like. Also, as the computing and controlling device, it is acceptable to use an MPU or the like, instead of the CPU 41.

According to the present embodiment, various types of programs are stored in the ROM 43, and also various types of data are stored in the data recording unit 22; however, it is also acceptable to have an arrangement in which the programs and the data are read from the same external storage device such as a memory card and written to the flash memory 44. Further, by replacing the memory card or the like, it is possible to update the programs and the data.

Further, peripheral devices (actuators) for the operating unit 24, the liquid crystal display 25, the speaker 26, and the communicating device 27 are electrically connected to the navigation controlling unit 23.

The operating unit 24 is operated, for example, when a starting point that serves as a guidance starting location and a destination that serves as a guidance terminal location are input by correcting the current location indicated when the vehicle starts running or when information related to facilities is retrieved. The operating unit 24 includes various types of keys and a plurality of operation switches. According to each of switch signals that are output when the switches are pushed or the like, the navigation controlling unit 23 performs control so that a corresponding one of various types of operations is performed. As the operating unit 24, it is acceptable to use a keyboard, a mouse, a barcode reader, a remote control device for remote-control operations; a joy stick, a light pen, a stylus pen, or the like. Further, it is acceptable to configure the operating unit 24 with a touch panel provided on the front surface of the liquid crystal display 25.

The liquid crystal display 25 is operable to display a route guidance screen on which a map based on the navigation map information 37A is displayed so that traffic information for each of the links can be displayed. The liquid crystal display 25 is also operable to display an operation guide, guidance related to operation menus and keys, a guiding route to guide the vehicle from a current location to a destination, guidance information along the guiding route, the traffic information, news, weather forecasts, the time, electronic mail, TV programs, and the like. Instead of the liquid crystal display 25, it is acceptable to use a CRT display, a plasma display, or the like. It is also acceptable to use a hologram device that projects a hologram image onto the windshield glass of the vehicle.

According to an instruction from the navigation controlling unit 23, the speaker 26 outputs, for example, audio guidance to guide the vehicle to drive along the guiding route. The audio guidance that is provided as a guide may be, for example, "Go 200 meters and turn right at intersection X", "National Route No. X ahead is congested." The audio output from the speaker 26 may be a synthesized audio, various types of sound effects, or various types of other guidance information that has been recorded on a tape or in a memory, in advance.

The communicating device 27 is a communicating unit that performs communication with the information distribution center 3 via a mobile phone network, or the like. The communicating device 27 transmits and receives a piece of update-purpose map information, which is the newest version, as well as the current traffic information to and from the information distribution center 3. In addition, the communicating device 27 receives, not only information from the information distribution center 3, but also traffic information transmitted from the Vehicle Information Communication System (VICS) 5 or the like that includes congestion information, traffic control information, parking lot information, traffic accident information, and information about how crowded service areas are.

Next, a traffic information generating process that is performed by the CPU 11 included in the information distribution center 3 in the navigation system 1 configured as described above, in order to generate current traffic information based on the probe information collected from the navigation apparatuses 2 installed in the probe cars 6 will be explained, with reference to FIG. 4. FIG 4 is a flowchart that shows the traffic information generating process performed by the CPU 11 included in the information distribution center 3 according to the present embodiment, in order to generate the current traffic information based on the probe information collected from the navigation apparatuses 2 installed in the probe cars 6.

The program shown in the flowchart in FIG. 4 is stored in the RAM 12 or the ROM 13 included in the information distribution center 3 and is executed by the CPU 11 once in a predetermined period of time (for example, once every 0.1 seconds or once every minute).

As shown in FIG. 4, at first, at step (hereinafter, simply expressed as "S") 11, the CPU 11 receives pieces of probe information transmitted from the navigation apparatuses 2 installed in the probe cars 6 via the center-side communicating apparatus 17 and sequentially stores the received pieces of probe information into the center-side traffic information DB 16.

At S12, the CPU 11 reads time data obtained by the timer 19 or the like and obtains the current date and time. The CPU 11 specifies factors related to the month 51B, the day of the week 51C, and a time period of the current point in time and stores the specified factors into the RAM 12.

Subsequently, at S 13, based on the map display data and the link data that are stored in the update-purpose map information 14A, the CPU 11 reads a piece of link data for a first link contained in the secondary mesh of which the mesh ID is "1". The CPU 11 specifies factors related to the mesh ID 51A and the road category 51D of the link. Subsequently, the CPU 11 reads a sample number 51E that corresponds to the first link, out of the sample number data 51 stored in the sample number DB 18, based on the factors related to the month 51B, the day of the week 51C, and the time period of the current point in time that have been specified at S12 and the factors related to the mesh ID 51A and the road category 51D that have been specified for the first link. The CPU 11 then stores the corresponding sample number 51E into the RAM 12. More specifically, the CPU 11 reads the sample number 51E that corresponds to the first link of which the mesh ID 51A is "1" and determines how many samples of the probe information are required in order to generate the traffic information of the first link. A link ID that indicates an order in a sequence is assigned to each of the links that are contained in each of the secondary meshes.

For example, in correspondence with a current point in time, when the month 51B is "February", the day of the week 51C is "Wednesday", a time period is "13:00-19:59", if the road category 51D for the first link of which the mesh ID 51A is "1" is "EXPRESSWAYS" that corresponds to an urban expressway, "1" is read as the sample number 51E out of the sample number data 51. Thus, the number of samples of the probe information that are required in order to generate the traffic information of the first link of which the mesh ID 51A is "1" is determined as at least "1".

After that, at S14, the CPU 11 performs a judging process to judge whether the center-side traffic information DB 16 stores therein an equal or larger number of pieces of probe information corresponding to the first link of which the mesh ID 51A is "1" than the required sample number that has been determined at S13 and that indicates how many samples are required in order to generate the traffic information of the first link.

Examples of the probe information include: the month, the day and the time, link information (e.g., a mesh ID, a link ID, the link length, whether there are traffic lights or not, the type of the road etc.), the traffic conditions (e.g., the travel time, the level of congestion, the speed etc.), the position of the vehicle, a mesh ID of the secondary mesh to which the vehicle position belongs, the operating state of the windshield wipers, the vehicle exterior/road surface temperature, the weather, ABS (Antilock Brake System) operation information, the road surface conditions, and the vehicle information (e.g., the type of the vehicle, the performance of the specifications, the vehicle speed, the occupants, the distribution rate of the weight of the vehicle, and how a torque is applied). Accordingly, by sequentially detecting pieces of link information, it is possible to detect the sample number for the probe information that is in correspondence with the first link.

In a case where the center-side traffic information DB 16 stores therein an equal or larger number of pieces of probe information that corresponds to the first link of which the mesh ID 51A is "1" than the required sample number that has been determined at S13 and that indicates how many samples are required in order to generate the traffic information of the first link (S 14: YES), the CPU 11 proceeds to the process at S 15. At S15, the CPU 11 reads all the pieces of probe information that correspond to the first link of which the mesh ID 51A is "1" and that have been stored in the center-side traffic information DB 16. Based on the read pieces of probe information, the CPU 11 generates current traffic information (e.g., congestion information indicating the level of congestion, a link travel time, etc.) that is in correspondence with the first link. The CPU 11 stores the generated current traffic information as part of the current traffic information 16A in such a manner that the stored information is in correspondence with the link ID of the first link. The CPU 11 then proceeds to the process at S16.

On the other hand, in a case where the center-side traffic information DB 16 stores therein a number of pieces of probe information that correspond to the first link of which the mesh ID 51A is "1", the number being no larger than the required sample number that has been determined at S 13 and that indicates how many samples are required in order to generate the traffic information of the first link (S14: NO), the CPU 11 proceeds to the process at S16.

At S 16, the CPU 11 performs a judging process to judge whether the processes at S 12 through S 15 have been performed for all of the links in all of the secondary meshes. In a case where the processes at S12 through S 15 have not been performed for all of the links in all of the secondary meshes (S16: NO), the CPU 11 performs the process at S12 and thereafter for a link that has a following link ID and is contained in a mesh having the mesh ID 51A. Also, if the CPU 11 has already performed the processes at S12 through S 15 for a link that has the last link ID and is contained in the mesh having the mesh ID 51A, the CPU 11 sequentially performs the processes at S12 through S 15 for each of the links that are contained in the mesh having the following mesh ID 51A.

On the other hand, in a case where the CPU 11 has already performed the processes at S12 through S 15 for all of the links in all of the secondary meshes (S16: YES), the CPU 11 ends the process.

As explained above, in the navigation system 1 according to the present embodiment, in the sample number data 51 that is stored, in advance, in the sample number DB 18 included in the center distribution center 3, the sample numbers 51 are specified and stored, in advance for each of the time periods such as "0:00 - 5:59" - "20:00 - 23:59", in correspondence with each of the factors related to the mesh IDs 51A, the months 51B, the days of the week 51C, and the road categories 51D. The CPU 11 included in the information distribution center 3 collects the pieces of probe information from the navigation apparatuses 2 installed in the probe cars 6 and stores the collected pieces of probe information into the center-side traffic information DB 16 (S11). Subsequently, the CPU 11 specifies the factors that are related to the month 51B, the day of the week 51C, and the time period that correspond to the current point in time, based on the time data obtained by the timer 19 or the like. The CPU 11 also specifies the factors that are related to the mesh ID 51A and the road category 51D of a corresponding one of the links, based on the map display data, the link data, and the like that are stored in the update-purpose map information 14A. The CPU 11 then reads the sample number 51E indicating how many samples are required in order to generate the traffic information of the corresponding one of the links, out of the sample number data 51. The CPU 11 thereby sequentially determines the collected sample numbers each of which indicates how many samples are required in order to generate the traffic information of a different one of the links (S 12 - S13). After that, in a case where the center-side traffic information DB 16 stores therein, for each of the links, an equal or larger number of pieces of probe information than the collected sample number indicating how many samples are required in order to generate the traffic information, the CPU 11 generates the traffic information for the link and stores the generated traffic information as part of the current traffic information 16A (S14 - S16).

As a result of the processes described above, it is possible to set, in advance, the sample numbers 51E, which are included in the sample number data 51 and each of which indicates how many collected samples of the probe information are required in order to generate the traffic information of a corresponding one of the links, in such a manner that the sample numbers 51E change in correspondence with the factors related to the mesh IDs 51A, the months 51B, the days of the week 51C, and the road categories 51D. In other words, it is possible to set the sample numbers 51E, in advance, in such a manner that the sample numbers 51E change in correspondence with the levels of reliability of the probe information. Thus, the CPU 11 is able to generate traffic information with an even higher level of accuracy with a smaller number of samples of the probe information, according to the sample numbers 51E that have been set, in advance, in correspondence with the levels of reliability of the probe information.

The road categories 51D are specified so as to correspond to "EXPRESSWAYS", "WITH TRAFFIC LIGHTS" denoting general roads having traffic lights, and "WITHOUT TRAFFIC LIGHTS" denoting general roads having no traffic lights, as well as "SMALL STREETS". Thus, because the level of reliability of the probe information for "EXPRESSWAYS" such as a national expressway having no traffic lights is high, it is possible to generate traffic information of the link that has a high level of accuracy, even by using a minimum number of samples of the probe information (for example, even if the sample number is set to 1). In addition, it is possible to make the level of accuracy of the traffic information higher by setting the collected sample number for general roads having traffic lights, to a larger number. Also, it is possible to generate traffic information with a higher level of accuracy by setting the collected sample number for general roads having no traffic lights to a smaller number (for example, by setting the collected sample number to 1).

The mesh ID 51A is assigned to each of the secondary meshes. Thus, it is possible to set the collected sample numbers in such a manner that the collected sample numbers change while the locality of each of the secondary meshes is taken into consideration, the collected sample numbers each indicating how many samples of the probe information are required in order to generate the traffic information of a corresponding one of the links. Consequently, the CPU 11 is able to generate traffic information that has a higher level of accuracy for each of the links, even by using a smaller number of samples of the probe information that has been collected from the probe cars 6.

The collected sample numbers each indicating how many samples of the probe information are required in order to generate the traffic information of a corresponding one of the links are set in correspondence with the months 51B and the days of the week 51C. Thus, it is possible to set the collected sample numbers each indicating how many samples of the probe information are required, in such a manner that the collected sample numbers change in correspondence with the factors related to the time of the year and the day of the week. Consequently, the CPU 11 is able to generate traffic information that has an even higher level of accuracy for each of the links, even by using a smaller number of samples of the probe information that has been collected from the probe cars 6.

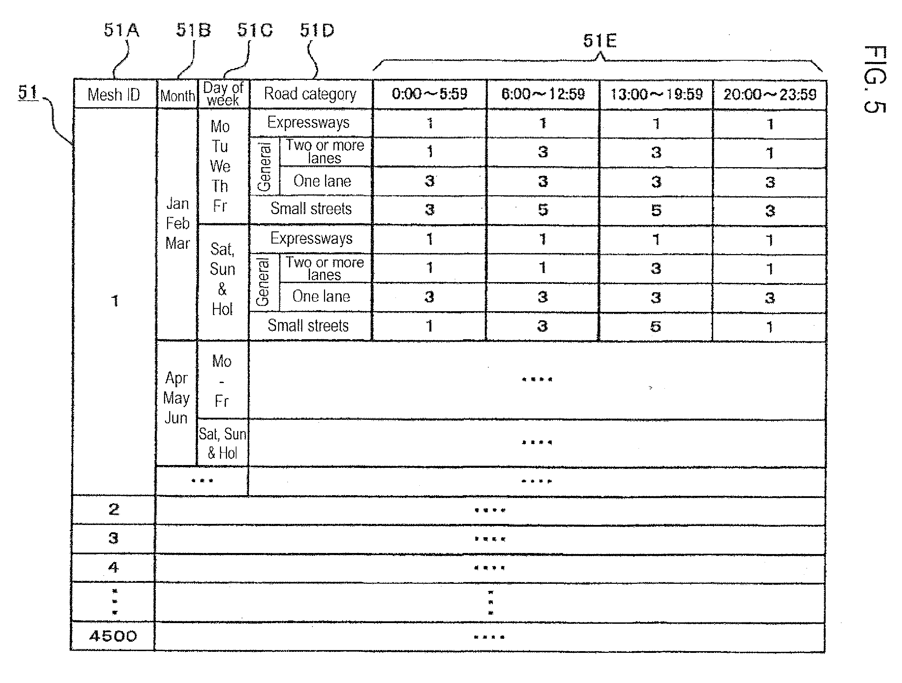

The present invention is not limited to the exemplary embodiment described above. Needless to say, it is possible to apply various types of improvements and modifications to the present invention within a scope that does not depart from the gist of the present invention.
(1) For example, as shown in FIG. 5, of the road categories 51D included in the sample number data 51, it is acceptable to divide "GENERAL" denoting the general roads into "TWO OR MORE LANES" denoting general roads having two or more lanes and "ONE LANE" denoting general roads having one lane.
   With this arrangement, it is possible to make the level of accuracy of the traffic information higher, by setting the collected sample number of the probe information that corresponds to general roads having one lane, to a larger number. In addition, it is also possible to generate traffic information with a higher level of accuracy by setting the collected sample number of the probe information that corresponds to general roads having two or more lanes, to a smaller number (for example, by setting the collected sample number to 1).
(2) According to the embodiment described above, the traffic information is generated in the information distribution center 3 by collecting the probe information from the probe cars 6. However, it is acceptable to have an arrangement in which the CPU 41 included in the navigation apparatus 2 installed in a representative vehicle generates traffic information by collecting the probe information from the navigation apparatuses 2 installed in the probe cars 6 around the representative vehicle, and transmits the generated traffic information to the information distribution center 3. With this arrangement, it is possible to reduce the processing load of the information distribution center 3.
(3) According to the embodiment described above, the sample numbers 51E each indicating how many collected sample numbers of the probe information are required are set in correspondence with the factors related to the mesh IDs 51A, the months 51B, the days of the week 51C, and the road categories 51D. However, it is acceptable to set the sample numbers 51E in such a manner that the sample numbers 51E change in correspondence with the types of data of the probe information. For example, in a case where the mesh ID 51A is "1", the month 5 1.B is "February", the day of the week 51C is "Monday through Friday", and the road category 51D is "EXPRESSWAYS", the sample number 51E for a piece of probe information corresponding to "the link travel time" is set to "2", whereas the sample number 51E for a piece of probe information corresponding to "the level of congestion" is set to "3", while the sample number 51E for a piece of probe information corresponding to other types of data is set to "1". With this arrangement, it is possible to generate the traffic information with a higher level of accuracy in correspondence with the types of data, even by using a smaller number of pieces of probe information.
(4) It is acceptable to have an arrangement in which the sample numbers 51E included in the sample number data 51 are set in such a manner that the sample numbers 51E change in correspondence with the types of the vehicles. For example, in a case where the mesh ID 51A is "1", the month 51B is "February", the day of the week 51C is "Monday through Friday", and the road category 51D is "GENERAL: NO TRAFFIC LTGHTS", the sample number 51E corresponding to the time period "6:00 - 12:59" for regular automobiles is set to "3", whereas the sample number 51E corresponding to the time period "6:00 - 12:59" for buses and taxis that stop often even when the roads are not congested is set to "6". With this arrangement, it is possible to generate the traffic information with a higher level of accuracy while the driving conditions corresponding to the types of the vehicles are taken into consideration, even by using a smaller number of samples for the probe information.
(5) The driving speed included in the probe information may largely vary for each of the probe cars 6. Thus, it is acceptable to have an arrangement in which the congestion information included in the traffic information is obtained by temporarily converting the driving speed in a piece of probe information to a level of congestion (for example, when the vehicle speed is 20 km/h or higher, the level of congestion is expressed as "no congestion"; when the vehicle speed is equal to or higher than 10 km/h and is lower than 20 km/h, the level of congestion is expressed as "crowded"; and when the vehicle speed is lower than 10 km/h, the level of congestion is expressed as "congested") and then by averaging the levels of congestions so as to calculate a required travel time. With this arrangement, it is possible to generate the traffic information that has a higher level of accuracy.
(6) It is acceptable to have an arrangement in which the sample number data 51 is set in correspondence with each of the factors in which consecutive non-business days (e.g., a three-day weekend), event information, and the like are taken into account. Further, it is acceptable to have an arrangement in which the sample number data 51 is set in correspondence with each of administrative districts, such as metropolis and prefectures, cities, wards, town, and villages, instead of each of the mesh IDs 51A assigned to the secondary meshes. In addition, in the description above, the sample numbers 51E are shown for the road categories 51D divided as "EXPRESSWAYS", "GENERAL: WITH TRAFFIC LIGHTS", "GENERAL: WITHOUT TRAFFIC LIGHTS", and "SMALL STREETS". Alternatively, however, it is acceptable to set the sample numbers 51E in correspondence with individual roads (for example, the sample numbers 51E may be set in correspondence with "National Route 1", "National Route 2", ... and "National Route X", respectively).
(7) In the description above, the sample numbers 51E are shown in correspondence with the road categories 51D divided as "EXPRESSWAYS", "GENERAL: WITH TRAFFIC LIGHTS", "GENERAL: WITHOUT TRAFFIC LIGHTS", and "SMALL STREETS". Alternatively, however, it is acceptable to set the sample numbers 51E in correspondence with the link IDs that are the identification codes (IDs) assigned to the road links. Further, it is acceptable to set the sample numbers 51E in correspondence with the link IDs by dividing the link IDs into "WITH TRAFFIC LIGHTS" denoting the links having traffic lights at their end points and "WITHOUT TRAFFIC LIGHTS" denoting the links having no traffic lights at their end points.

With this arrangement, it is possible to make the level of accuracy of the traffic information of each of the links higher, by setting the collected sample number for the links that have traffic lights at their end points, to a larger number. In addition, it is also possible to generate traffic information with a higher level of accuracy by setting the collected sample number for the links that have no traffic lights at their end points, to a smaller number (for example, by setting the collected sample number to 1).

## Claims

1. A traffic information generating apparatus comprising:
a probe information collecting (10) unit that collects probe information from a navigation apparatus (2);
a sample number storing unit (18) that stores therein, in correspondence with each of road categories, a collected sample number indicating how many samples of the probe information are required in order to generate traffic information of a link;
a sample number judging unit (11) that judges whether or not as many samples of the probe information as required have been collected, based on the collected sample number; and
a controlling unit (11) that, when the sample number judging unit has judged that as many samples of the probe information as required have been collected, performs control so that the traffic information of the link is generated.

2. The traffic information generating apparatus according to claim 1, wherein
the sample number storing unit (18) stores therein the collected sample number for each of areas, and
the sample number judging unit (11) judges whether or not as many samples of the probe information as required have been collected, based on the collected sample number that is in correspondence with one of the areas that contains the link corresponding to the probe information.

3. The traffic information generating apparatus according to claim 1 or 2, wherein
the collected sample number is generated in correspondence with at least one of a month, a day of a week, and a time period.

4. The traffic information generating apparatus according to any one of claims 1 to 3, wherein
the road categories include a general road, and
the collected sample number is generated in correspondence with whether the general road has a traffic light or not.

5. The traffic information generating apparatus according to any one of claims 1 to 3, wherein
the road categories include a general road, and
the collected sample number is generated in correspondence with how many lanes the general road has.

6. A traffic information generating method comprising:
a probe information collecting step (S11) of collecting probe information from a navigation apparatus;
a sample number judging step (13) of judging whether or not as many samples of the probe information as required have been collected, based on a collected sample number that is stored in advance in correspondence with each of road categories and that indicates how many samples of the probe information are required in order to generate traffic information of a link; and
a traffic information generating step (S15) of, when it has been judged that as many samples of the probe information as required have been collected, generating the traffic information of the link.
